# EUROPEAN PATENT APPLICATION

(11) **EP 2 197 142 A1**
(43) Date of publication of application: **16.06.2010**
(21) Application number: 08305941.0
(22) Date of filing: 15.12.2008
(51) Int. Cl.: H04L 1/22

(54) **System and method for packet protection switching**

(71) Applicant: Alcatel Lucent, 75008 Paris (FR)
(72) Inventor: De Blasio, Giuseppe, 00135 Roma (IT); Barzaghi, Giorgio, 20056 Grezzago (IT); Gariani, Giancarlo, 20062 Cassano d'Adda (MI) (IT)
(74) Representative: Shamsaei Far, Hassan

(57) **Abstract**

A method, a transmitter and a receiver of transmitting packets over radio communication links, wherein at least a first radio link and a second radio link are used for delivering flows of packets, said flows of packets containing protected packets and unprotected packets, the method comprising the steps of:
- allocating at least one identification mark on a protected packet based on at least one parameter corresponding to the packet;
- reproducing from a first protected packet, a second protected packet substantially identical to the first protected packet;
- transmitting the first protected packet over the first radio links and the second protected packet over the second radio link;
- transmitting a first unprotected packet on the first radio link and a second unprotected packet on the second radio link.

## Description

The present invention relates to protection switching of packets transmitted over radio links.

### BACKGROUND ART

Protection switching is widely known in radio communications. In general terms, protection switching is a mechanism used in a communications network in order to ensure connectivity in case of failure or malfunction of a network element or a link involved in transmission or reception of data from one end of the network to another. One of the widely used protection schemes typically involves using a main channel and a protection channel.

Recently techniques have been developed in order to transmit packets over radio links. Such type of transmission also requires a protection mechanism. The known techniques for protection switching of packets over radio links typically make use of two radio channels of the radio link based on a 1+1 linear protection switching architecture or a 1:1 linear protection switching architecture. When the signal to be protected is a flow of packets - a situation that is becoming more and more frequent in mobile backhauling networks - these protection switching architectures are used in the following manner:

In the 1+1 case, the flow of packets at the transmitting side is reproduced (copied) in order to generate a second flow identical the to original flow and the two flows are transmitted through the two channels, one through the main or the working channel and the other through the protection channel (these channels may also be referred to as transport entities).

At the receiving side, the protected flow which is received from the transport entity that is experiencing either no faulty condition, or a faulty condition (signal degrade or signal failure) which is considered less significant thus presenting a better quality than the other flow, is selected and made available at the receiving interface.

In the 1:1 case, the flow of packets at transmitting side feeds only the working transport entity for transmission. The protection transport entity is maintained on standby and is used only in case of need, when the working transport entity experiences a faulty condition.

At the receiving side, if it is detected that the working transport entity is experiencing a faulty condition (signal degrade or signal failure) worse than the protection transport entity, the flow of packets at transmitting side is switched to the protection transport entity. In the 1:1 case, a coordination scheme between transmitting side and receiving side is needed in order to select the same transport entity.

Herein the term unprotected is to be understood to refer to a packet or a flow of packets, as the case may be, which is intended to be transmitted over a radio link without a requirement of protecting the data carried by such packet or flow.

However, in the techniques described in the above two examples it is not possible to transport an unprotected flow of packets regardless of the status of the protection switching because:
- in the 1+1 case, the two transport entities are only used to transport the protected flow; and
- in the 1:1 case, the protection transport entity not usually used to transport the protected flow can in principle be used to carry an unprotected flow; however in case of switching the transmission of the protected flow to the protection transport entity (which may occur when the working transport entity experiences a defect condition) the unprotected flow is not transmitted and therefore lost.

### DESCRIPTION OF THE INVENTION

The above described techniques therefore do not make optimum use of radio resources.

The inventors have found a solution in order to allow for both protected and unprotected flows of packets to be carried over a radio link implementing a selective radio protection scheme for packets as is described hereinbelow.

According to embodiments of the invention there is provided a method of transmitting packets over radio communication links, wherein at least a first radio link and a second radio link are used for delivering flows of packets, said flows of packets containing protected packets and unprotected packets, the method comprising the steps of:
- allocating at least one identification mark on a protected packet based on at least one parameter corresponding to the packet;
- reproducing from a first protected packet, a second protected packet substantially identical to the first protected packet;
- transmitting the first protected packet over the first radio link and the second protected packet over the second radio link;
- transmitting a first unprotected packet over the first radio link and a second unprotected packet over the second radio link.

According to some embodiments of the invention, the method further comprises the steps of, at reception:
a- extracting the first protected packet from the first radio link and the second protected packet from the second radio link;
b- storing the extracted first protected packet and the extracted second protected packet in a buffer;
c- identifying the first protected packet by its identification mark and the substantially identical second protected packet by its identification mark;
d- selecting one protected packet from between the first protected packet and the second protected packet;
e- extracting the first unprotected packet from the first radio link and the second unprotected packet on the second radio link;
f- constructing a combined packet flow comprising protected packets as selected in step d and unprotected packets extracted from one of the first or the second radio link
- constructing a packet flow comprising unprotected packets extracted from another one of the first or the second radio link.

According to further embodiments of the invention there is provided a transmitter for transmitting packets over radio communication links, using at least a first radio link and a second radio link configured to deliver flows of packets, said flows of packets containing protected packets and unprotected packets, the transmitter comprising a packet marker for allocating at least one identification mark on a protected packet based on at least one parameter corresponding to the packet; means for reproducing from a first protected packet, a second protected packet substantially identical to the first protected packet; the transmitter being configured for transmitting the first protected packet over the first radio link and the second protected packet over the second radio link and for transmitting a first unprotected packet on the first radio link and a second unprotected packet on the second radio link.

According to further embodiments of the invention there is provided a receiver for receiving flows of packets from at least a first radio link and a second radio link, said flows of packets containing protected packets and unprotected packets, the receiver being configured for:
a- receiving a first protected packet over the first radio link and a second protected packet over the second radio link substantially identical to the first protected packet;
b- receiving from the first radio link a first unprotected packet and from the second radio link a second unprotected packet;
c- identifying the first protected packet by and identification mark and the substantially identical second protected packet by its identification mark;
d- selecting one protected packet from between the first protected packet and the second protected packet;
e- constructing a combined packet flow comprising protected packets as selected in step d and unprotected packets extracted from one of the first or the second radio link; and
f- constructing a packet flow comprising unprotected packets extracted from another one of the first or the second radio link.
These and further features and advantages of the present invention are described in more detail in the following description as well as in the claims with the aid of the accompanying drawings.

### BRIEF DESCRIPTION OF THE DRAWINGS

Figure 1 is a schematic exemplary representation of a transmitter configured to perform protection switching at transmitting side according to embodiments of the invention.
Figure 2 is a schematic exemplary representation of a receiver configured to perform protection switching at receiving side according to embodiments of the invention.

### DETAILED DESCRIPTION OF EMBODIMENTS

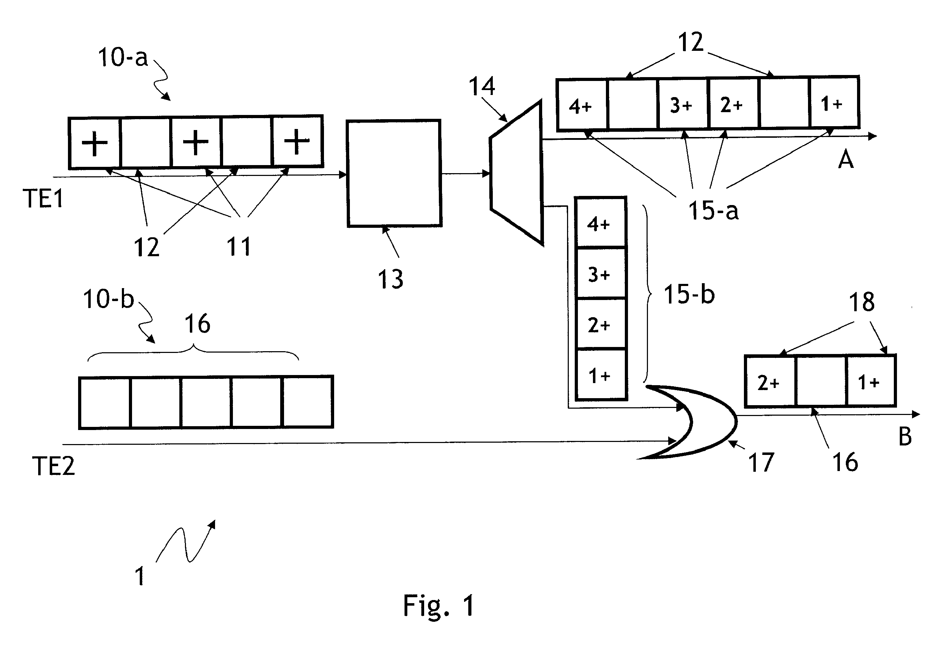

Figure 1 is a schematic exemplary representation of a transmitter 1 configured to perform protection switching at transmitting side according to embodiments of the invention. It is to be noted that only the element of the transmitter which are relevant for the understanding of the present description are shown.

A first flow of packets 10-a comprises protected packets 11 and unprotected packets 12. For the purpose of a better illustration, the protected packets are also represented by a plus sign (+). A second flow of packets 10-b comprises unprotected packets 16.

It is assumed that the first flow of packets 10-a is carried over the working (main) channel TE1, and the second flow of packets 10-b is carried over the protection (spare) channel TE2. These channels are herein referred to as transport entities.

It is noted that both the working and the protection transport entities are configured to carry flows of protected and unprotected packets.

In the embodiments of the present invention, protected packets may be transported on either one of the two transport entities. However unprotected packets transported on one transport entity are transmitted over that same transport entity. This means that for example unprotected packets 12 on the working transport entity TE1 are transmitted over this same transport entity without being fed to the protection transport entity TE2. Likewise, unprotected packets 16 on the working transport entity TE2 are transmitted over this same transport entity without being fed to the working transport entity TE1. A signal degradation or any failure conditions on the transport entities TE1 and TE2 have effect on the unprotected packets 12 or 16, for example causing the loss of these packets.

According to some embodiments of the invention, before the protected packets are fed into transport entities, an identification mark is allocated to them. This process is performed in an identification marker unit 13. The identification mark is a parameter corresponding to the specific protected packet used for identifying that protected packet 11. Preferably, the identification mark comprises a sequence ordering number or a timestamp, either one of which may serve for identifying the packets according to their order in the flow. Alternatively, or in addition, the identification mark may contain a check code in order to enable performing error detection at the receiving side, unless the packet contains already that check code, for example cyclic redundancy checks (CRC) of Ethernet frames.

Furthermore, a flow of packetscan be identified by the type and number of fields that build the packet itself, or, in case of packets with the same structure, by the value of some specific fields. For example, in case of Ethernet frames, a flow of VLAN tagged frames may be identified with a certain marker and a flow of untagged frames may be marked with another marker. In addition, with respect to the flow of VLAN tagged frames, different flows of these frames may further be identified using the VLAN ID as identifier. In this manner, the identification mark may comprise various identification levels.

Once identification marks are allocated to the protected packets 11, the flow of packets (protected and unprotected) is fed into a selective mirroring unit 14. The selective mirroring unit detects the protected packets 11 from unprotected packets 12 and reproduces a new flow of protected packets substantially identical to the received flow of protected packets 11 (*i*.*e*. generating a copy of the received flow of protected packets). The protected packets of the reproduced flow also carry the identification marks. The identification mark of a reproduced packet is either exactly the same as that of the packet of which it is a copy (for example the same sequence of bits, such as 101001 for both) or it is an identification mark that bears some correspondence to the identification mark of the original packet (for example an opposite sequence of bits, such as 101001 for one and 010110 for the other).

The selective mirroring unit 14 outputs, from a first output a flow of protected packets 15-a and unprotected packets 12. As can be observed in figure 1, the protected packets carry identification marks which in the figure are illustrated as numbers 1+, 2+, 3+, 4+. Also it is shown in the figure, in exemplary manner, that the packets are output in an order from 1 to 4 which may represent the sequence of the packets in the corresponding flow. The unprotected packets are shown without identification marks as they do not require such identification. The resulting flow is sent for transmission on output link A (which corresponds to the working transport entity TE1).

The selective mirroring unit 14 further outputs from a second output a flow of the reproduced protected packets 15-b which is input into an adder 17. Adder 17 also receives the flow of unprotected packets 16 and outputs a combination of the protected packets 18 of the flow 15-b and the unprotected packets 16. Here also, the protected flows are shown to carry identification marks which in the figure are illustrated as numbers 1+, 2+. The resulting flow is sent for transmission on output link B (which corresponds to the protection transport entity TE2).

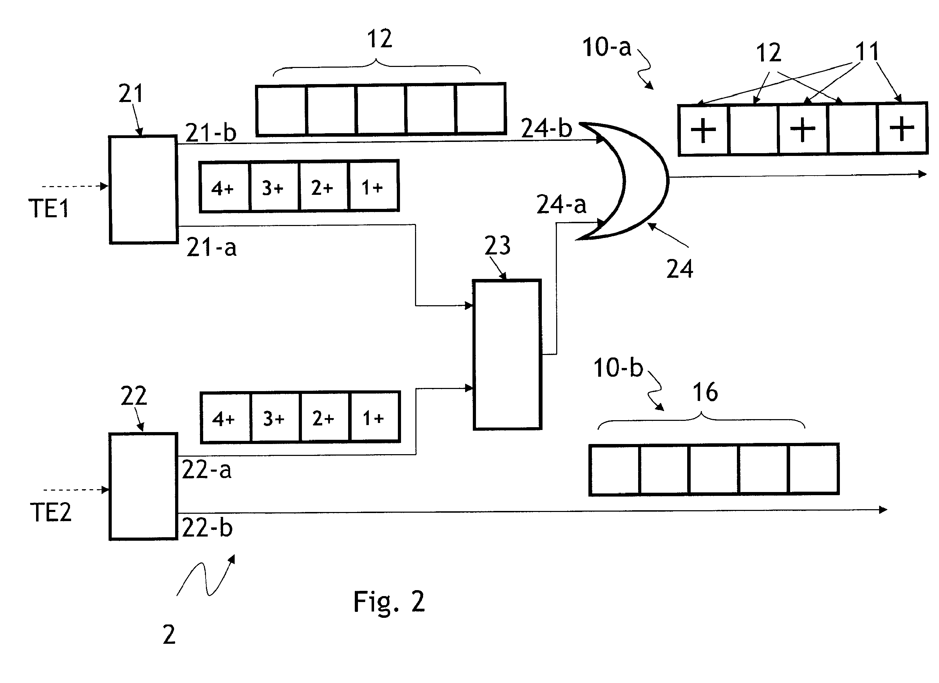

Figure 2 is a schematic exemplary representation of a receiver 2 configured to perform protection switching at the receiving side according to embodiments of the invention. In this figure like elements have been allocated like reference numerals.

The flows of packets are received from the working transport entity TE1 and the protection transport entity TE2. The flow of packets on the working transport entity TE1 is input into a packet extractor 21 where protected packets are extracted and maintained in a buffer (not shown). Likewise, the flow of packets on the protection transport entity TE2 is input into a packet extractor 22 where protected packets are extracted and maintained in a buffer (not shown).

The packet extractor 21 outputs at a first output port 21-a, the extracted flow of protected packets 1+, 2+, 3+, 4+ which is input in a packet checker unit 23. Likewise, the packet extractor 22 outputs at a first output port 22-a, the extracted flow of protected packets 1+, 2+, 3+, 4+ which is input in the same packet checker unit 23.

At the packet checker unit 23, the protected packets received from the working transport entity TE1 and from the protection transport entity TE2 which have the same identification mark (for example the same sequencing number or timestamp and belong to the same flow) are checked and compared as regards any fault present therein. As any two packets which bear the same identification mark should be identical, in case of error detected on one of the two packets, the faulty packet is dropped and the faultless packet is retained.

Using sequencing in identification marks of the packets further allows for detecting packets which have been lost over a transport entity in which case the only other packet (identical to lost packet) received over the other transport entity is retained.

In case the packet received from the working transport entity TE1 and the packet received from the protection transport entity TE2 are both unfaulty, one of the two packets is retained, for example the packet received from the working transport entity TE1 is retained, the other one being dropped.

In case of the packet received from working transport entity and the packet received from protection transport entity are both faulty, no packet is retained. This situation may occur when both working and protection transport entities TE1 and TE2 are experiencing a signal degradation condition. When both working and protection transport entities are experiencing a signal failure condition the packets are lost and thus no protection can take place.

The two buffers mentioned above at the receiving side may also be used to absorb the differential delay of packets over the radio link and keep the flow of protected packets coming from protection transport entity TE2 and working transport entity TE1 aligned. In doing so, the selection of the packet which is retained is made in a hitless manner since there is no loss of packets belonging to the protected flow, thus obtaining a hitless switching for the protected flow..

The flow of packets retained after the buffering and error check is then output from the checker unit 23 to a first input 24-a of an adder 24.

On the other hand the packet extractor 21 also extracts the unprotected packets 12 received from the working transport entity TE1 and the packet extractor 22 also extracts the unprotected packets 16 received from the protection transport entity TE2.

The unprotected packets 12 output from the packet extractor 21 are input into a second input 24-b of the adder 24 where they are combined with the protected packets received at the first input 24-a of the adder 24. The adder therefore reconstructs substantially the same flow of packets (unless one or more packets are lost) which was present at the input port of the working transport entity TE1 at the transmitting side (figure 1). The reconstructed flow is shown in figure 2 by reference numeral 10-a comprising protected packets 11 further distinguished by a plus (+) sign and unprotected packets 12.

On the other hand, unprotected packets 16 are output from the packet extractor 22 and as such constitute the flow 10-b of unprotected packets similar to the flow of unprotected packets which was present at the input port of the protection transport entity TE2 at the transmitting side (figure 1).

Assuming A to be the throughput of unprotected flows 12 which are fed in the working transport entity, B to be the throughput of protected flows 11 which are fed in the working transport entity, C to be the throughput of unprotected flows which are fed in the protection transport entity and D to be an extra throughput required for the identification marks allocated to the protected packets, the working transport entity may then be implemented with a radio channel with at least A + B + D bandwidth, while the protection transport entity may be implemented with a radio channel with at least C + B + D bandwidth.

In this manner, an effective packet switching architecture for radio links is provided that allows also for transporting unprotected flows, thus optimizing to a significant extent the use of the available radio bandwidth. The invention further allows to take advantage from the flexibility in selecting the type of flows to protect and therefore provide better management of the radio bandwidth.

Elements such as the identification marker 13, the selective mirroring unit 14, the adders 17 and 24, the packet extractors 21 and 22 and the packet checker unit 23, may include blocks which can be hardware devices, software modules or combination of hardware devices and software modules the use of which being known to persons skilled in the art and including means such as an Application Specific Integrated Circuit (ASIC), a Field Programmable Gate Array (FPGA) and/or a microprocessor, and in a preferred embodiment through or together with a software program like Very high speed integrated circuit Hardware Description Language (VHDL) or C programming language. Therefore, it is understood that the scope of the protection is extended to such a program and in addition to a computer readable means having a message therein, such computer readable storage means contain program code means for the implementation of one or more steps of the method, when this program is run on a computer, an ASIC, an FPGA or a microprocessor.

It is also to be noted that the order of the steps of the method of the invention as described and recited in the corresponding claims is not limited to the order as presented and described and may vary without departing from the scope of the invention.

## Claims

1. A method of transmitting packets over radio communication links, wherein at least a first radio link and a second radio link are used for delivering flows of packets, said flows of packets containing protected packets and unprotected packets, the method comprising the steps of:
- allocating at least one identification mark on a protected packet based on at least one parameter corresponding to the packet;
- reproducing from a first protected packet, a second protected packet substantially identical to the first protected packet;
- transmitting the first protected packet over the first radio link and the second protected packet over the second radio link;
- transmitting a first unprotected packet over the first radio link and a second unprotected packet over the second radio link.

2. The method of claim 1 further comprising the steps of, at reception:
a- extracting the first protected packet from the first radio link and the second protected packet from the second radio link;
b- storing the extracted first protected packet and the extracted second protected packet in a buffer;
c- identifying the first protected packet by its identification mark and the substantially identical second protected packet by its identification mark;
d- selecting one protected packet from between the first protected packet and the second protected packet;
e- extracting the first unprotected packet from the first radio link and the second unprotected packet on the second radio link;
f- constructing a combined packet flow comprising protected packets as selected in step d and unprotected packets extracted from one of the first or the second radio link; and
g- constructing a packet flow comprising unprotected packets extracted from another one of the first or the second radio link.

3. A transmitter for transmitting packets over radio communication links, using at least a first radio link and a second radio link configured to deliver flows of packets, said flows of packets containing protected packets and unprotected packets, the transmitter comprising a packet marker for allocating at least one identification mark on a protected packet based on at least one parameter corresponding to the packet; means for reproducing from a first protected packet, a second protected packet substantially identical to the first protected packet; the transmitter being configured for transmitting the first protected packet over the first radio link and the second protected packet over the second radio link and for transmitting a first unprotected packet on the first radio link and a second unprotected packet on the second radio link.

4. A receiver for receiving flows of packets from at least a first radio link and a second radio link, said flows of packets containing protected packets and unprotected packets, the receiver being configured for:
a- receiving a first protected packet over the first radio link and a second protected packet over the second radio link substantially identical to the first protected packet;
b- receiving from the first radio link a first unprotected packet and from the second radio link a second unprotected packet;
c- identifying the first protected packet by and identification mark and the substantially identical second protected packet by its identification mark;
d- selecting one protected packet from between the first protected packet and the second protected packet;
e- constructing a combined packet flow comprising protected packets as selected in step d and unprotected packets extracted from one of the first or the second radio link; and
f- constructing a packet flow comprising unprotected packets extracted from another one of the first or the second radio link.

5. A computer program product for carrying out the steps of the method of claim 1 when said program is run on a computer, an ASIC, an FPGA or a microprocessor.

6. A computer readable storage means having a message therein, such computer readable storage means contain program code means for the carrying out the steps of the method of claim 1, when this program is run on a computer, an ASIC, an FPGA or a microprocessor.
